# EUROPEAN PATENT SPECIFICATION

(11) **EP 2 042 384 B1**
(45) Date of publication and mention of the grant of the patent: **17.08.2011**
(21) Application number: 08017018.6
(22) Date of filing: 26.09.2008
(51) Int. Cl.: B60R 21/213

(54) **Airbag apparatus**
Airbag-Vorrichtung
Dispositif d'airbag

(30) Priority: 27.09.2007 JP 2007251095
(43) Date of publication of application: 01.04.2009
(73) Proprietor: TOYODA GOSEI CO., LTD., Nishi-Kasugai-gun, Aichi-ken, 452-8564 (JP)
(72) Inventor: Iida, Takashi, Nishikasugai-gun Aichi-ken 452-8564 (JP); Yamanaka, Makoto, Nishikasugai-gun Aichi-ken 452-8564 (JP)
(74) Representative: Kramer - Barske - Schmidtchen

(56) References cited:
- DE-A1- 19 930 058
- US-A1- 2004 239 084

## Description

The present invention relates to an airbag apparatus.

Airbag apparatuses provided with an airbag having the following configuration have been known. The airbag has an inlet and is accommodated in a folded manner between a roof panel and a roof headlining of a vehicle. The roof headlining is located above the upper ends of a pair of rear pillar garnishes, which are located in a rear portion of the vehicle and extend vertically. In the folded airbag, the inlet is arranged in a position closer to the front of the vehicle. When supplied with gas through the inlet, the folded airbag is inflated while being deployed toward the rear side of the rear seats.

The space of the passenger compartment in the rear portion of some vehicles widens toward its bottom. An airbag that is deployed and inflated in the space of such a passenger compartment in the rear of a vehicle generally has a size along the width of the vehicle that increases toward the lower end when deployed and inflated, so that its shape corresponds to the shape of the passenger compartment. If such an airbag is folded only in such a manner that its lower portion approaches its upper portion, the length of the folded airbag is greater than the space between the upper ends of the rear pillar garnishes. Thus, it is difficult to accommodate the folded airbag between the roof panel and the roof headlining.

Accordingly, for example, Japanese Laid-Open Patent Publication No. 2004-338639 discloses in paragraph 0063 and Fig. 10 a configuration in which each end portion of an elongated folded intermediate, which is formed by folding an airbag such that its lower portion approaches its upper portion, is folded back at a single folding line. The thus folded airbag has a reduced length and is easily accommodated between the roof panel and the roof headlining.

However, the airbag that is folded in the manner disclosed in Japanese Laid-Open Patent Publication No. 2004-338639 is not optimum in terms of the smoothness of deployment. The folded-back portions, which are formed by folding back the end portions of the folded intermediate, are first unfolded when gas starts being supplied to the folded airbag. The unfolding of the folded-back portions can be interfered by the rear garnishes and the headrests of the rear seats. In such a case, the airbag cannot be smoothly deployed.

### SUMMARY OF THE INVENTION

Accordingly, it is an objective of the present invention to provide an airbag apparatus that allows an airbag to be smoothly deployed.

To achieve the foregoing objective and in accordance with one aspect of the present invention, an airbag apparatus that includes an airbag and is provided in a vehicle is provided. The vehicle includes a pair of vertically extending rear pillar garnishes, and a roof headlining arranged upward of upper ends of the rear pillar garnishes. The airbag has an inlet and is folded and accommodated on the roof headlining in the ceiling of the vehicle. In the folded airbag, the inlet is arranged in a position closer to the front of the vehicle. When supplied with gas through the inlet, the folded airbag is inflated while being deployed toward the rear side of rear seats. The folded airbag is formed by folding an elongated folded intermediate extending along a direction of the width of the vehicle at a folding line near each end of the folding intermediate, and thus the folded airbag includes folded-back portions each including one of the ends of the folded intermediate. The folded airbag is attached to the vehicle ceiling by means of attachment portions each provided at one of the folded-back portions. Each folded-back portion is not located outward of the upper end of the corresponding rear pillar garnish with respect to the width direction of the vehicle. When each folded-back portion is pivoted about the corresponding attachment portion, a part of the folded-back portion that is the furthest from the attachment portion is pivoted at a predetermined pivoting radius, and the folded-back portion overlaps a headrest of the corresponding rear seat by an overlapping dimension, which is obtained by subtracting a minimum distance between the headrest and the corresponding attachment portion from the pivoting radius. The width of each folded-back portion and the position of each headrest with respect to the width direction of the vehicle are adjusted such that the overlapping dimension is less than or equal to 40% of the pivoting radius.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a side view illustrating a rear portion of a vehicle in which an airbag apparatus according to one embodiment of the present invention is installed;
Fig. 2 is a rear view of the vehicle shown in Fig. 1;
Fig. 3 is a cross-sectional plan view of a rear pillar and a rear pillar garnish of the vehicle shown in Fig. 1;
Fig. 4 is a perspective view illustrating the rear pillar garnish shown in Fig. 3;
Fig. 5 is a front view showing an unfolded airbag of the airbag apparatus shown in Fig. 1;
Fig. 6 is a cross-sectional view taken along line A-A of Fig. 2;
Fig. 7A is a cross-sectional front view for explaining a state in which a folded airbag of the airbag apparatus shown in Fig. 1 is accommodated in a ceiling of an automobile;
Fig. 7B is an enlarged view of a part of Fig. 7B;
Figs. 8 and 9 are schematic representation of Fig. 7B, for explaining movement of a folded-back portion during deployment and inflation of the airbag of the airbag apparatus shown in Fig. 1;
Fig. 10 is a cross-sectional side view showing a state of the airbag of the airbag apparatus shown in Fig. 1 when the airbag is being deployed and inflated;
Fig. 11 includes a plan view and a front view of a folded state of the airbag of the airbag apparatus shown in Fig. 1;
Fig. 12 is a front view showing an unfolded airbag of an airbag apparatus according to another embodiment of the present invention, in which second attachment portions are different from those in the foregoing embodiment;
Fig. 13A is a cross-sectional front view showing a state in which the airbag of Fig. 12 is folded and accommodated in a ceiling of an automobile;
Fig. 13B is a plan view showing a folded state of the airbag of Fig. 12; and
Fig. 14 is a diagram schematically showing a part of Fig. 13.

### DETAILED DESCRIPTION OF THE PREFERRED EMBODIMENTS

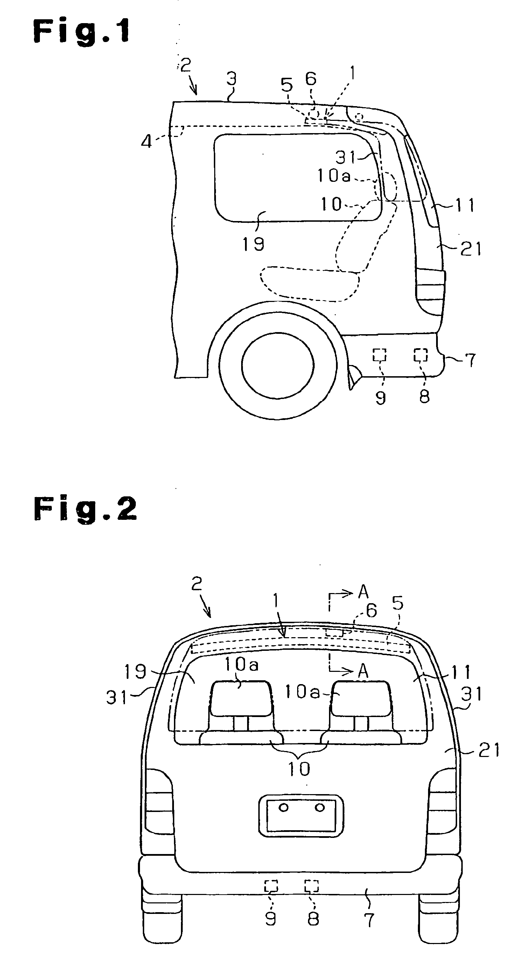

One embodiment of the present invention will now be described with reference to Figs. 1 to 11.

As shown in Figs. 1 and 2, an airbag apparatus 1 according to the present embodiment has an airbag 5, which is folded and accommodated in a space in a rear portion of an automobile 2. Specifically, the airbag 5 is accommodated between a roof panel 3 and a roof headlining 4 located below the roof panel 3, or in the ceiling of the automobile 2. The airbag 5 and the roof headlining 4 are located above a pair of rear pillars 31, which extend vertically in a rear portion of the automobile 2. The space between the rear pillars 31 increases toward its bottom. An inflator 6 for supplying gas to the airbag 5 is located between the roof panel 3 and the roof headlining 4, at a position in front of the airbag 5.

In a rear portion of the automobile 2, for example, in a rear bumper 7, a sensor 8 is provided that outputs a signal when an impact greater than or equal to a predetermined value is applied to the rear of the automobile 2. Signals from the sensor 8 are sent to a controller 9. When receiving a signal from the sensor 8, the controller 9 outputs an actuation signal to the inflator 6. When receiving an actuation signal from the controller 9, the inflator 6 supplies gas to the airbag 5. When receiving the gas in this manner, the airbag 5 accommodated in the ceiling in a folded state is inflated while being deployed rearward in the automobile 2, more specifically, toward a space behind rear seats 10. After being deployed and inflated, the airbag 5 is located between the rear seats 10 and a rear window 11 as shown by two dot chain lines in Figs 1 and 2.

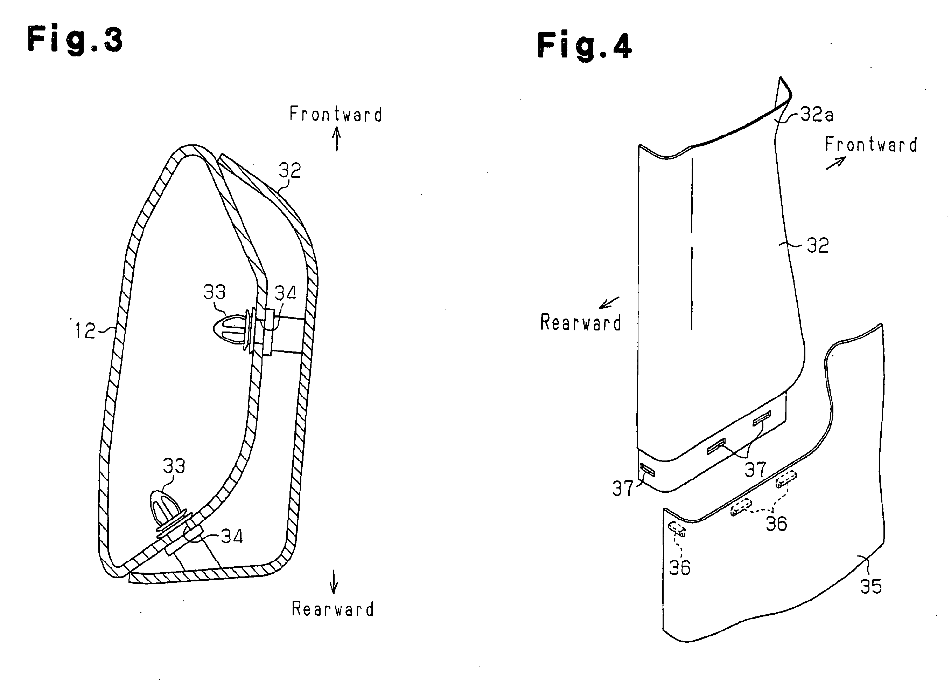

As shown in Fig. 3, a surface of each rear pillar 31 that faces a passenger compartment 19 (the right surface as viewed in Fig. 3) is covered by a rear pillar garnish 32. Fasteners 33 are provided on a surface of each rear pillar garnish 32 that faces the corresponding rear pillar 31, and fastener holes 34 are provided in the rear pillar 31. Each rear pillar garnish 32 is engaged with the corresponding rear pillar 31 by fitting the fasteners 33 to the fastener holes 34. The space between the rear pillar garnishes 32, which are thus engaged with the rear pillars 31, increases toward its bottom. The shape of the space in a rear portion of the passenger compartment 19 is defined by the rear pillar garnishes 32. That is, since the space between the rear pillar garnishes 32 increases toward its bottom, the space of a rear portion in the passenger compartment 19 widens toward its bottom.

As shown in Fig. 4, another garnish 35 is provided below each rear pillar garnish 32. Engaging claws 36 are provided in an upper portion of each garnish 35, and engaging holes 37 are formed in a lower portion of each rear pillar garnish 32. Each rear pillar garnish 32 is engaged with the corresponding garnish 35 by fitting the engaging claws 36 into the engaging holes 37.

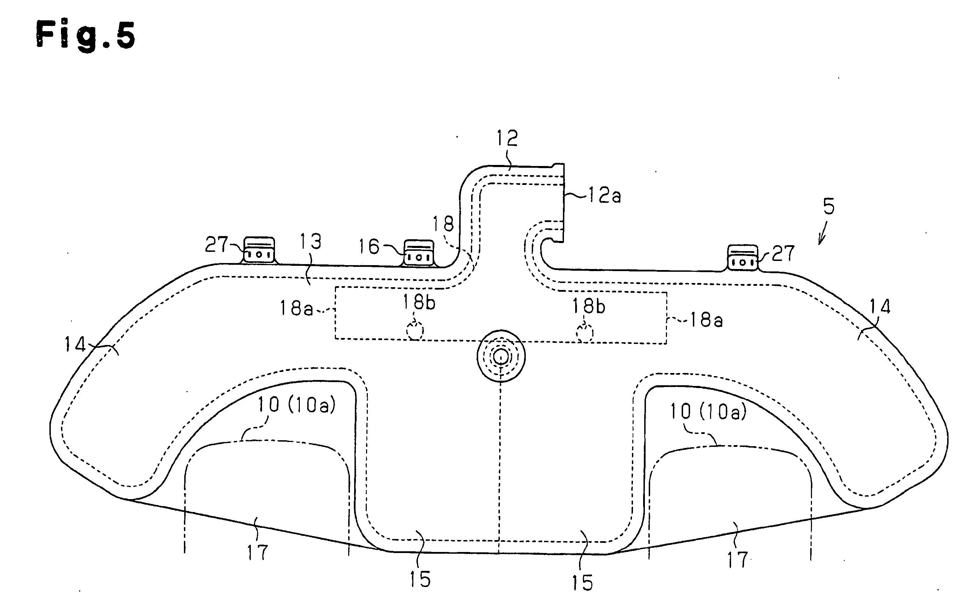

The airbag 5 will now be described with reference to Fig. 5.

The airbag 5 is formed by sewing a pair of fabric sheets. The size of the airbag 5 in the lateral direction of Fig. 5 increases toward the lower end. The airbag 5 has a connection portion 12, a lateral inflatable cell 13, a left and right vertical inflatable cells 14, and two center vertical inflatable cells 15. The connection portion 12 extends upward from the center of the lateral inflatable cell 13 as viewed in Fig. 5. The connection portion 12 has an inlet 12a and is connected to the inflator 6. Each of the left and right vertical inflatable cells 14 extends downward from one of the ends of the lateral inflatable cell 13 as viewed in Fig. 5. The center vertical inflatable cells 15 extend downward from the center of the lateral inflatable cell 13 as viewed in Fig. 5. The lateral inflatable cell 13 communicates with each of the connection portion 12 and the vertical inflatable cells 14, 15. A section 17 of the airbag 5 that is located below the lateral inflatable cell 13 and between the left vertical inflatable cell 14 and the center vertical inflatable cells 15, and a section 17 of the airbag 5 that is located below the lateral inflatable cell 13 and between the right vertical inflatable cell 14 and the center vertical inflatable cells 15 are portions of one of the two fabric sheets and cannot be inflated.

When the airbag 5 is deployed and inflated, the lateral inflatable cell 13 extends laterally, more specifically, along the width direction of the automobile 2. The left and right vertical inflatable cells 14 each extend rearward and downward from one of the ends of the lateral inflatable cell 13 in the automobile 2, and are located outward of the headrest 10a of the corresponding rear seat 10 with respect to the width direction of the automobile 2. The center vertical inflatable cells 15 extend rearward and downward in the automobile 2 from the center of the lateral inflatable cell 13 and are located between the headrests 10a. The non-inflatable sections 17 are each located behind the corresponding headrest 10a to intervene between the headrest 10a and the rear window 11.

An inner tube 18 is provided inside the connection portion 12 and the lateral inflatable cell 13 of the airbag 5. The inner tube 18 conducts gas from the inflator 6 along predetermined directions in the airbag 5. The inner tube 18 can be folded together with the airbag 5. The folded inner tube 18 can be unfolded together with the folded airbag 5.

A section of the inner tube 18 that is located in the connection portion 12 has an opening corresponding to the inlet 12a. A section of the inner tube 18 that is located in the lateral inflatable cell 13 extends along the direction in which the lateral inflatable cell 13 extends. An opening 18a is formed at each end of the section of the inner tube 18 located in the lateral inflatable cell 13. The openings 18a each correspond to one of the left and right vertical inflatable cells 14. Openings 18b are formed at a center portion of the section of the inner tube 18 located in the lateral inflatable cell 13. The openings 18b each correspond to one of the center vertical inflatable cells 15. Gas supplied from the inflator 6 to the airbag 5 through the inlet 12a passes through the inner tube 18 and flows into the left and right vertical inflatable cells 14 via the left and right openings 18a, and flows into the center vertical inflatable cells 15 via the center openings 18b.

When accommodating the airbag 5 between the roof panel 3 and the roof headlining 4, the airbag 5 is folded to cause a lower portion as viewed in Fig. 5, or a first portion, to approach an upper portion as viewed in Fig. 5, or a second portion. As a result, when folded, the airbag 5 has an elongated shape extending along a first direction. By receiving the supply of gas through the inlet 12a, the folded airbag 5 is inflated while being deployed in a second direction perpendicular to the first direction, such that the first portion moves away from the second portion. The inlet 12a is arranged in a part of the folded airbag 5 that is located in a trailing side in the second direction.

As shown in Fig. 5, a first attachment portion and two second attachment portions 27 are provided in the second portion of the airbag 5. More specifically, the first attachment portion 16 is substantially located at a center portion of the upper edge of the lateral inflatable cell 13, and the second attachment portions 27 are provided at the ends of the upper edge of the lateral inflatable cell 13.

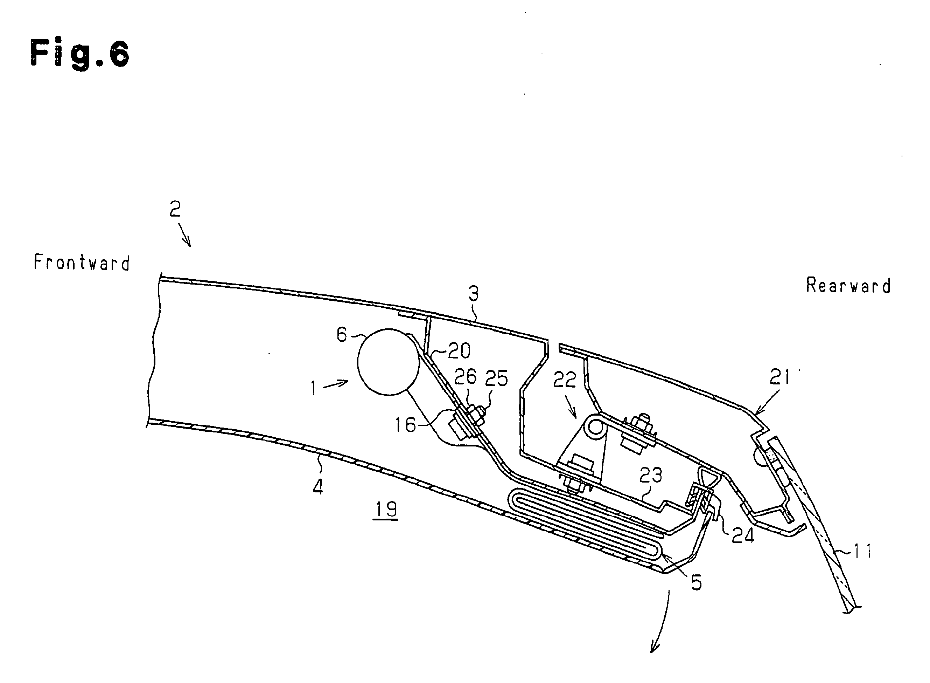

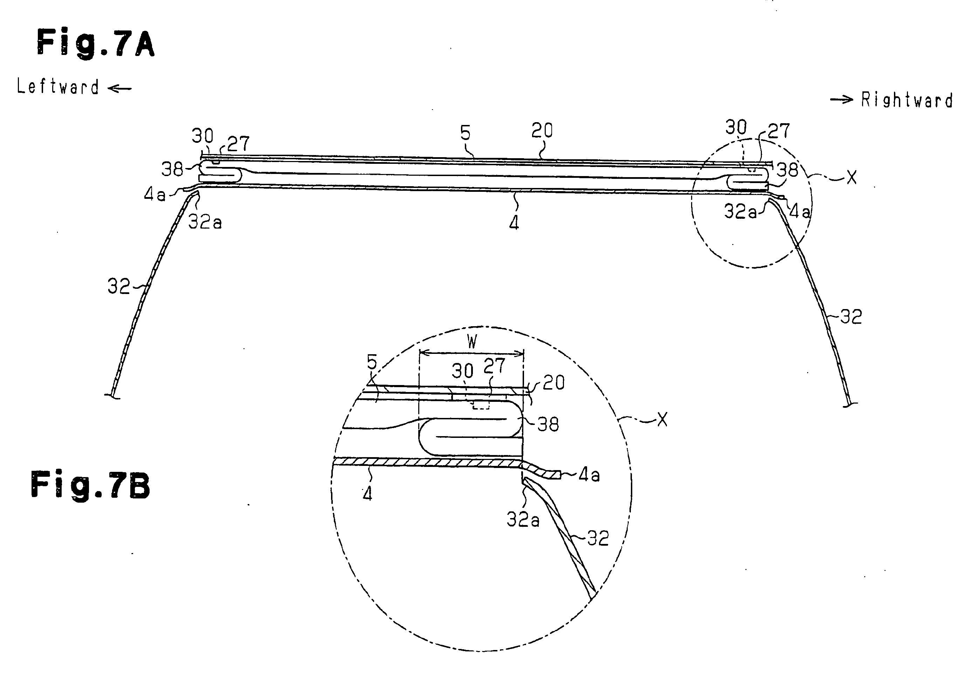

The manner in which the airbag 5 is accommodated between the roof panel 3 and the roof headlining 4 will now be described with reference to Figs. 6 and 7.

As shown in Fig. 6, the entire surface of the roof panel 3 that faces the passenger compartment 19 is covered by the roof headlining 4, which is made of a flexible material. An inner panel 20, which is fixed to the roof panel 3, is located between the roof panel 3 and the roof headlining 4. The rear end of the roof panel 3 (the right end as viewed in Fig. 6) is bent so as to approach the inner panel 20 and coupled to the rear end of the inner panel 20. The rear end of the roof panel 3 functions as a rear roof rail 23 for supporting a rear door 21. The rear door 21 is pivotally attached to the rear end of the roof panel 3, that is, to the rear roof rail 23 by means of a hinge mechanism 22. The rear door 21 has the rear window 11.

The roof headlining 4 is attached to the roof panel 3 so as to be pivotable downward about a part that is in front of a section of the inner panel 20 attached to the roof panel 3 (left end as viewed in Fig. 4), for example, about the front end of the roof headlining 6. The rear end of the roof headlining 4 is engaged with an engagement piece 24 provided at the rear end of the rear roof rail 23 (alternatively, at the rear end of the roof panel 3 or the inner panel 20). The engagement between the rear end of the roof headlining 4 and the engagement piece 24 is cancelled when the roof headlining 4 is pushed substantially downward.

The folded airbag 5 and the inflator 6 are accommodated in a space below the inner panel 20 and between the roof panel 3 and the roof headlining 4. The airbag 5 is rearward of the inflator 6. The inner panel 20 is formed to have a high rigidity so as to be hardly deformed when an impact is applied to the automobile 2 from behind, and the airbag 5 and the inflator 6 are attached to the inner panel 20. The airbag 5 is attached to the inner panel 20 with a bolt 25 and a nut 26 at the first attachment portion 16 and with bolts 30 at the second attachment portions 27.

As described above, the airbag 5 is folded such that the first portion (the lower portion as viewed in Fig. 5) approaches the second portion (the upper portion as viewed in Fig. 5). More specifically, the first portion is accordion-folded, and the second portion is rolled, so that an elongated folded intermediate is formed. Thereafter, the folded intermediate is folded at an even number (for example, two) of folding lines near each end. The folding of the airbag 5 is thus complete. The thus folded airbag 5 has accordion-folded back portions 38, each including one end of the folded intermediate. As shown in Fig. 7A, the airbag 5 is arranged over the roof headlining 4 such that the folded-back portions 38 are downward of the remainder of the airbag 5. The folded airbag 5 is bound by using binding tape (not shown) at positions including the folded-back portions 38. Due to the difference in the ways of folding, gas supplied from the inflator 6 is more likely to flow into the first portion of the airbag 5, which is accordion folded, compared to the second portion of the airbag 5 in the rolled state. On the other hand, the rolled second section of the airbag 5 is unfolded by rolling on the inclined roof headlining 4 when the roof headlining 4 pivots downward.

As shown in Fig. 7A, the roof headlining 4 is located above upper ends 32a of the rear pillar garnishes 32. Each of left and right ends 4a of the roof headlining 4 is located outside of the upper end 32a of the corresponding rear pillar garnish 32 with respect to the direction of the width of the automobile 2. Since the airbag 5 has a shape that corresponds to the space in the rear portion of the passenger compartment 19, the length of the folded intermediate is greater than the space between the upper ends 32a of the rear pillar garnishes 32. Therefore, the folded intermediate cannot be accommodated on the roof headlining 4 as-is. However, since the ends of the folded intermediate are folded back, the folded airbag 5 has a width less than the space between the upper ends 32a of the rear pillar garnishes 32, and can be easily accommodated on the roof headlining 4.

The second attachment portions 27 are located at the ends of the folded airbag 5, that is, on the folded back portions 38. The second attachment portions 27 are attached to the inner panel 20 in a state where the folded airbag 5 is expanded outward in the direction of the width of the automobile 2.

As shown in Figs. 7A and 7B, each folded-back portion 38 is not located outward of the upper end 32a of the corresponding rear pillar garnishes 32 with respect to the direction of the width of the automobile 2. More specifically, the outer edge of each folded-back portion 38 is aligned with the upper end 32a of the corresponding rear pillar garnish 32 with respect to the width direction of the automobile 2.

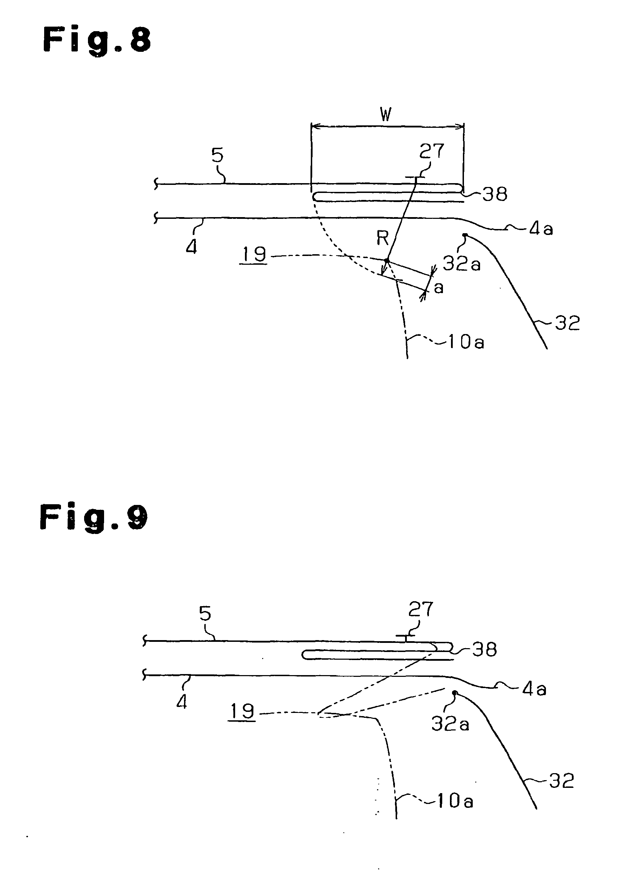

In Fig. 8, which is a schematic diagram of Fig. 7B, reference symbol W represents the width of each folded-back portion 38. Reference symbol R in Fig. 8 represents a pivoting radius of a part of each folded-back portion 38 that is furthest from the corresponding second attachment portion 27, when the folded-back portion 38 pivots about the second attachment portion 27. Reference symbol a in Fig. 8 represents an overlapping dimension of each folded-back portion 38 and the corresponding headrest 10a, which is obtained by subtracting the minimum distance between the same headrest 10a and the corresponding second attachment portion 27 from the pivoting radius R. The overlapping dimension a is set to be less than or equal to 40% of the pivoting radius R. The overlapping dimension ***a*** can be adjusted by changing at least one of the width W of each folded-back portion 38 and the position of each headrest 10a in the width direction of the automobile 2. If the height of the headrests 10a is adjustable, the overlapping dimension ***a*** is set to be less than or equal to 40% of the pivoting radius R when the headrests 10a are at the highest positions.

When gas is supplied from the inflator 6 to the airbag 5 through the inlet 12a, a substantially downward pressing force is applied to the roof headlining 4, mostly due to the inflation of the folded-back portions 38 of the airbag 5. This causes each of the left and right ends 4a of the roof headlining 4 to extend beyond the upper end 32a of the corresponding rear pillar garnishes 32, and is located downward of the upper end 32a. Thereafter, each folded-back portion 38 is unfolded while slightly interfering with the headrest 10a, as indicated by two-dot chain lines as shown in Fig. 9. However, since the overlapping dimension a is set to be less than or equal to 40% of the pivoting radius R, and each folded-back portion 38 is not located outward of the upper end 32a of the corresponding rear pillar garnishes 32 with respect to the width direction, the interference of the folded-back portion 38 with the rear pillar garnish 32 and the headrest 10a of the rear seat 10 is reduced. The folded-back portion 38 is thus unfolded smoothly.

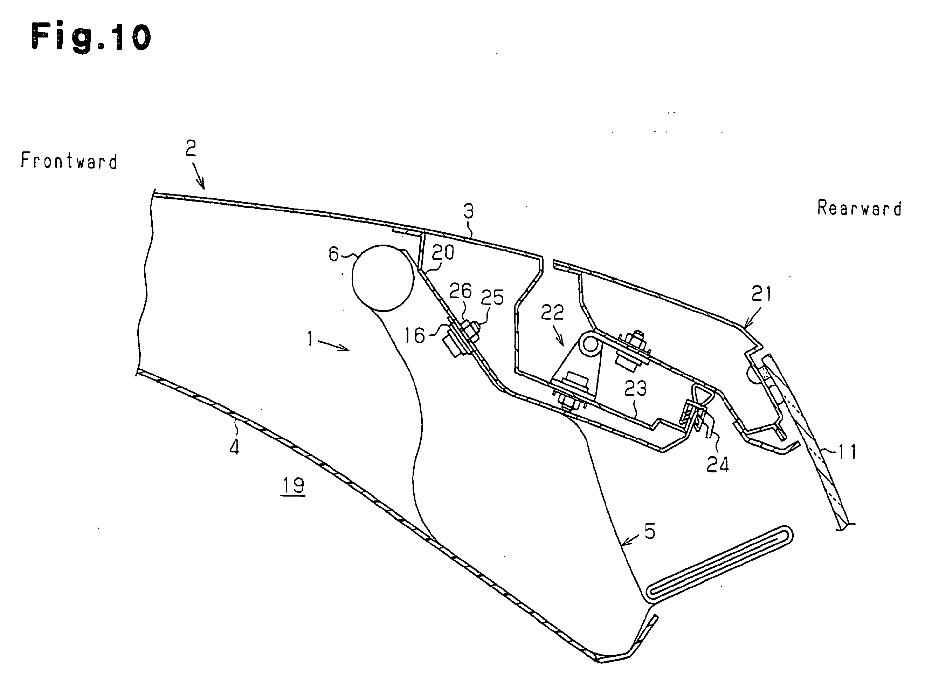

When substantially downward pressure is applied to the roof headlining 4, the roof headlining 4 is pivoted downward about its front end as shown in Fig. 10. At this time, the rolled portion of the airbag 5 is unfolded by rolling on the inclined roof headlining 4. When deployed and inflated, the airbag 5 intervenes between the rear seats 10 and the rear window 11.

The above described embodiment has the following advantages.

The folding of the airbag 5 is not completed until both ends of the elongated folded intermediate are folded back. The thus folded airbag 5 is shorter than the folded intermediate and thus can be accommodated in the ceiling of the automobile 2 in a state extending along the width of the automobile 2.

The folded-back portions 38 at the ends of the folded airbag 5 are each located inward of the upper end 32a of the corresponding rear pillar garnishes 32 with respect to the width direction of the automobile 2. Further, the overlapping dimension a, which is obtained by subtracting the minimum distance between each second attachment portion 27 and the corresponding headrest 10a from the pivoting radius R, is set to be less than or equal to 40% of the pivoting radius R. This reduces the interference of the folded portions 38 with the rear pillar garnishes 32 and the headrests 10a of the rear seats 10, allowing the folded-back portions 38 to be smoothly unfolded.

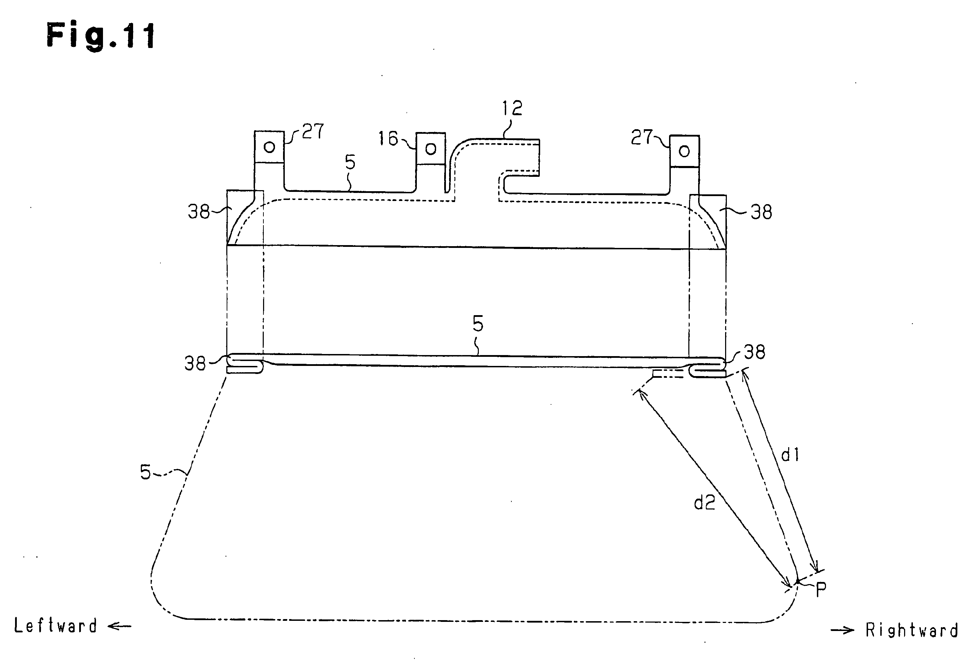

When the folded intermediate of the airbag 5 is accordion folded at an even number of folding lines near each end, the ends of the folded intermediate are not arranged in the folded-back portions 38 to face inward as indicated by two-dot chain lines in Fig. 11 with respect to the width direction of the automobile 2, but are arranged to face outward as shown by solid lines in Fig. 11. Compared to the configuration in which the ends of the folded intermediate of the airbag 5 are arranged in the folded-back portions 38 to face inward, the configuration in which the ends face outward shortens the movement distance of the ends during the deployment and inflation of the airbag 5. This enables the airbag 5 to be more quickly deployed and inflated. When the ends of the folded intermediate of the airbag 5 are arranged in the folded-back portions so as to face outward, the movement distance of each end during the deployment and inflation of the airbag 5 is indicated by reference symbol d1 in Fig. 11. When the ends of the folded intermediate of the airbag 5 are arranged in the folded-back portions so as to face inward, the movement distance of each end during the deployment and inflation of the airbag 5 is indicated by reference symbol d2 in Fig. 11.

The above embodiment may be modified as follows.

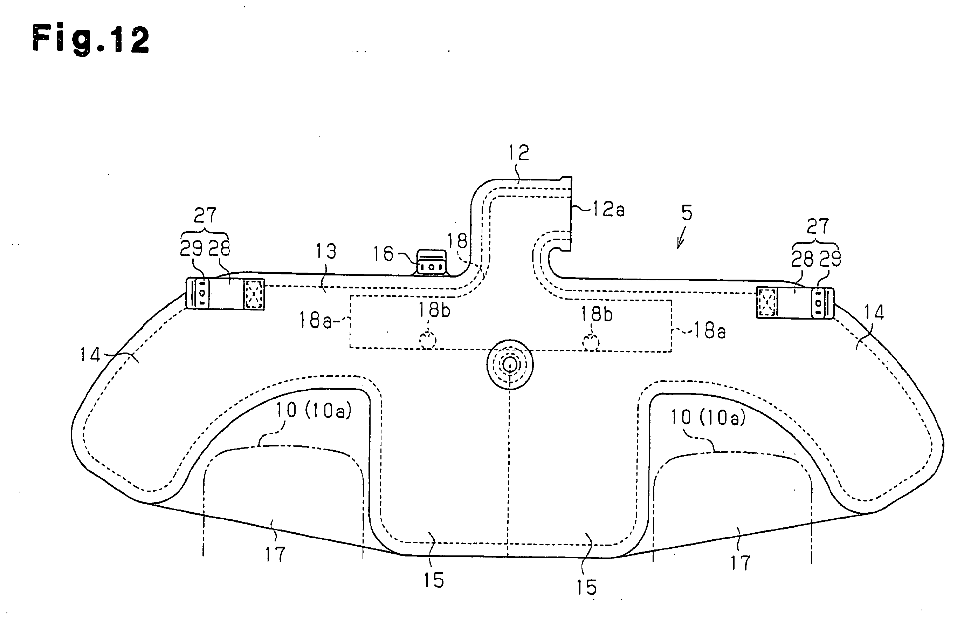

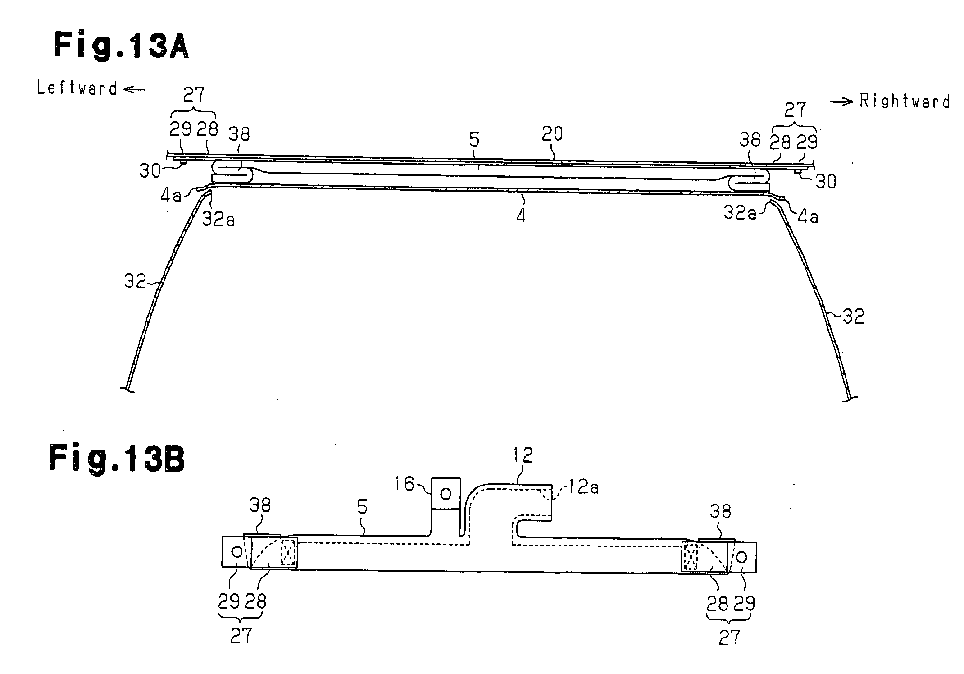

The second attachment portions 27 of the airbag 5 may be constructed as shown in Figs. 12 to 14. The second attachment portions 27 shown in Figs. 12 to 14 function to attach the folded airbag 5 to the ceiling of the automobile 2, while applying to the folded airbag 5 outward tension in the longitudinal direction of the folded airbag 5, thereby preventing the ends of the folded airbag 5 from hanging down. Each second attachment portion 27 has a fixation portion 29 fixed to the ceiling of the automobile 2, and a coupling portion 28. The coupling portion 28 has a distal end to which the fixation portion 29 is attached and a proximal end attached to the airbag 5. The fixation portion 29 is made of metal and has a rectangular plate-like shape. The coupling portions 28 are formed of the same fabric sheet as the airbag 5. When attaching the airbag 5 to the inner panel 20 by means of the second attachment portions 27, the coupling portion 28 of each second attachment portion 27 is expanded outward in the width direction of the automobile 2. As a result, the folded airbag 5, which is attached to the inner panel 20, contacts the lower surface of the inner panel 20.

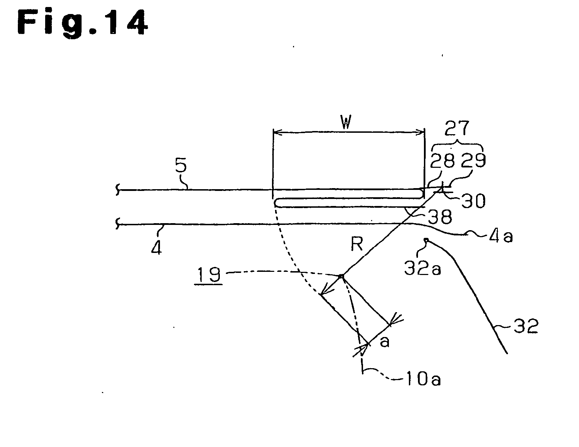

Reference symbol R in Fig. 14 represents a pivoting radius of a part of each folded-back portion 38 that is furthest from the fixation portion 29 of the corresponding second attachment portion 27, when the folded-back portion 38 pivots about the fixation portion 29. Reference symbol ***a*** in Fig. 14 represents an overlapping dimension of each folded-back portion 38 and the corresponding headrest 10a, which is obtained by subtracting the minimum distance between the same headrest 10a and the fixation portion 29 of the corresponding second attachment portion 27 from the pivoting radius R. In this case also, the overlapping dimension ***a*** is set to be less than or equal to 40% of the pivoting radius R.

In the illustrated embodiment, the folded intermediate of the airbag 5 is folded at an even number of folding lines near each end. However, the folded intermediate may be folded at an odd number (one or more than two) of folding lines near each end.

The outer edges of the folded-back portions 38 may be located inside of the upper ends 32a of the rear pillar garnishes 32 with respect to the direction of the width of the automobile 2. That is, the outer edge of each folded-back portion 38 does not need to be aligned with the upper end 32a of the corresponding rear pillar garnish 32 with respect to the width direction of the automobile 2.

## Claims

1. An airbag apparatus (1) that comprises an airbag (5) and is provided in a vehicle (2), wherein the vehicle (2) includes a pair of vertically extending rear pillar garnishes (32), and a roof headlining (4) arranged upward of upper ends (32a) of the rear pillar garnishes (32), wherein the airbag (5) has an inlet (12a) and is folded and accommodated on the roof headlining (4) in the ceiling of the vehicle (2), wherein, in the folded airbag (5), the inlet is arranged in a position closer to the front of the vehicle (2)_{,} and wherein, when supplied with gas through the inlet, the folded airbag (5) is inflated while being deployed toward the rear side of rear seats (10),
the airbag apparatus (1) being **characterized in that** the folded airbaf (5) is formed by folding an elongated folded intermediate extending along a direction of the width of the vehicle (2) at a folding line near each end of the folding intermediate, and thus the folded airbag (5) includes folded-back portions (38) each including one of the ends of the folded intermediate, and wherein the folded airbag (5) is attached to the vehicle (2) ceiling by means of attachment portions (27) each provided at one of the folded-back portions (38),
wherein each folded-back portion (38) is not located outward of the upper end of the corresponding rear pillar garnish with respect to the width direction of the vehicle (2), and
wherein, when each folded-back portion (38) is pivoted about the corresponding attachment portion (27), a part of the folded-back portion (38) that is the furthest from the attachment portion (27) is pivoted at a predetermined pivoting radius (R), and the folded-back portion (38) over laps a headrest (10a) of the corresponding rear seat by an overlapping dimension (a), which is obtained by subtracting a minimum distance beween the headrest and the corresponding attachment portion (27) from the pivoting radius (B), and wherein the width (W) of each folded-back portion (38) and the position of each headrest (10a) with respect to the width direction of the vehicle (2) are adjusted such that the overlapping dimension is less than or equal to 40% of the pivoting radius (R).

2. The airbag apparatus (1) according to claim 1, wherein the folded airbag (5) is formed by folding the folded intermediate at an even number of folding lines located near each of the ends of the folded intermediate.

3. The airbag apparatus (1) according to claim 2, wherein each of the ends of the folded intermediate is located in the corresponding folded-back portion (38) while being caused to face outward with respect to the width direction of the vehicle (2).

## Patentansprüche

1. Airbagvorrichtung (1), die einen Airbag (5) aufweist und in einem Fahrzeug (2) vorgesehen ist, wobei das Fahrzeug (2) ein Paar sich vertikal erstreckender Hecksäulenverkleidungen (32) und einen Dachhimmel (4) aufweist, der oberhalb von oberen Enden (32a) der Hecksäulenverkleidungen (32) angeordnet ist, wobei der Airbag (5) einen Einlass (12a) aufweist und auf dem Dachhimmel (4) in der Decke des Fahrzeugs (2) gefaltet und verstaut ist, wobei bei dem gefalteten Airbag (5) der Einlass an einer Position angeordnet ist, die näher an der Vorderseite des Fahrzeugs (2) liegt, und wobei sich der gefaltete Airbag (5) aufbläst, wenn Gas durch den Einlass zugeführt wird, während er sich in Richtung der Rückseite der Rücksitze (10) entfaltet,
wobei die Airbagvorrichtung (1) **dadurch gekennzeichnet ist, dass** der gefaltete Airbag (5) durch Falten eines langgestreckten gefalteten Zwischenstücks, das sich in einer Breitenrichtung des Fahrzeugs (2) erstreckt, an einer Faltlinie in der Nähe von jedem Ende des gefalteten Zwischenstücks ausgebildet ist, und folglich der gefaltete Airbag (5) zurück gefaltete Bereiche (38) beinhaltet, von denen jeder eines der Enden des gefalteten Zwischenstücks aufweist, und wobei der gefaltete Airbag (5) mittels Befestigungsteilen (27), von denen jedes an einem der zurück gefalteten Bereiche (38) vorgesehen ist, an der Fahrzeugdecke befestigt ist,
wobei jeder zurück gefaltete Bereich (38) nicht außerhalb des oberen Endes der entsprechenden Hecksäulenverkleidung mit Bezug auf die Breitenrichtung des Fahrzeugs (2) angeordnet ist, und
wobei, wenn jeder zurück gefaltete Bereich (38) um das entsprechende Befestigungsteil (27) geschwenkt wird, ein Teil des zurück gefalteten Bereichs (38), der der am fernsten von dem Befestigungsteil (27) gelegene ist, um einen vorher festgelegten Schwenkradius (R) geschwenkt wird, und der zurück gefaltete Bereich (38) eine Kopfstütze (10a) des entsprechenden Rücksitzes mit einem Überlappungsmaß (a) überlappt, das durch Subtrahieren eines Minimalabstands zwischen der Kopfstütze und dem entsprechenden Befestigungsteil (27) von dem Schwenkradius (R) erhalten wird, und wobei die Breite (W) jedes zurück gefalteten Bereichs (38) und die Position jeder Kopfstütze (10a) mit Bezug auf die Breitenrichtung des Fahrzeugs (2) derart angepasst sind, dass das Überlappungsmaß geringer als oder gleich 40% des Schwenkradius (R) ist.

2. Airbagvorrichtung (1) nach Anspruch 1, wobei der gefaltete Airbag (5) durch Falten des gefalteten Zwischenstücks an einer geraden Anzahl von Faltlinien, die sich nahe jedem der Enden des gefalteten Zwischenstücks befinden, ausgebildet ist.

3. Airbagvorrichtung (1) nach Anspruch 2, wobei jedes der Enden des gefalteten Zwischenstücks sich in dem entsprechenden zurück gefalteten Bereich (38) befindet, während es veranlasst wird, mit Bezug auf die Breitenrichtung des Fahrzeugs (2) nach außen gerichtet zu sein.

## Revendications

1. Dispositif à coussin d'air (1) qui comprend un coussin d'air (5) et est disposé dans un véhicule (2), dans lequel le véhicule (2) comprend une paire de garnitures-colonnes arrière (32) s'étendant verticalement et un revêtement de toit (4) aménagé vers le haut des extrémités supérieures (32a) des garnitures-colonnes arrière (32), dans lequel le coussin d'air (5) a une entrée (12a) et est plié et logé dans le revêtement de toit (4) du véhicule (2), dans lequel, dans le coussin d'air plié (5), l'entrée est disposée dans une position plus proche de l'avant du véhicule (2) et dans lequel, lorsqu'il est alimenté en gaz par l'entrée, le coussin d'air plié (5) est gonflé tout en se déployant vers le côté arrière des sièges arrière (10),
le dispositif à coussin d'air (1) étant **caractérisé en ce que** le coussin d'air plié (5) est formé en pliant un élément intermédiaire allongé plié, s'étendant sur la largeur du véhicule (2) sur une ligne de pliage à proximité de chaque extrémité de l'élément intermédiaire de pliage et, par suite, le coussin d'air plié (5) comprend des portions repliées (38) comprenant chacune une des extrémités de l'élément intermédiaire plié et dans lequel le coussin d'air plié (5) est fixé au plafond du véhicule (2) à l'aide de portions de fixation (27) aménagées chacune sur une des portions repliées (38),
dans lequel chaque portion repliée (38) n'est pas située à l'extérieur de l'extrémité supérieure de la garniture-colonne arrière correspondante par rapport au sens de la largeur du véhicule (2), et dans lequel, lorsque chaque portion repliée (38) est soumise à un pivotement autour de la portion de fixation correspondante (27), une partie de la portion repliée (38), qui est la plus éloignée de la portion de fixation (27), pivote selon un rayon de pivotement prédéterminé (R) et la portion repliée (38) chevauche un appuie-tête (10a) du siège arrière correspondant sur une dimension de chevauchement (a), que l'on obtient en soustrayant une distance minimale entre l'appuie-tête et la portion de fixation correspondante (27 du rayon de pivotement (B) et dans lequel la largeur (W) de chaque portion repliée (38) et la position de chaque appuie-tête (10a), par rapport au sens de la largeur du véhicule (2), sont ajustées de sorte que la dimension de chevauchement soit inférieure ou égale à 40 % du rayon de pivotement (R).

2. Dispositif à coussin d'air (1) selon la revendication 1, dans lequel le coussin d'air plié (5) est formé en pliant l'élément intermédiaire plié sur un nombre pair de lignes de pliage situées à côté de chacune des extrémités de l'élément intermédiaire plié.

3. Dispositif à coussin d'air (1) selon la revendication 2, dans lequel chacune des extrémités de l'élément intermédiaire plié est placée dans la portion repliée correspondante (38) tout en étant amenée à faire face à l'extérieur par rapport au sens de la largeur du véhicule (2).
